# EUROPÄISCHE PATENTSCHRIFT

(11) **EP 2 128 401 B1**
(45) Veröffentlichungstag und Bekanntmachung des Hinweises auf die Patenterteilung: **19.12.2012**
(21) Anmeldenummer: 09002558.6
(22) Anmeldetag: 24.02.2009
(51) Int. Cl.: C06B 25/36

(54) **Kraftmaschine**
Power machine
Machine motrice

(30) Priorität: 27.05.2008 DE 102008025217
(43) Veröffentlichungstag der Anmeldung: 02.12.2009
(73) Patentinhaber: Bayern-Chemie Gesellschaft für flugchemische Antriebe mbH, 84544 Aschau a. Inn (DE)
(72) Erfinder: Wieland, Karl, Dr., 84453 Mühldorf (DE); Stierle, Ralf, 83533 Edling (DE); Ramsel, Jürgen, 84559 Kraiburg (DE); Schmid, Konrad, 93613 Sinzing (DE)
(74) Vertreter: Berngruber, Otto

(56) Entgegenhaltungen:
- EP-A2- 1 321 505
- EP-A2- 2 025 907
- WO-A-2007/064965
- WO-A-2007/091270
- DE-A1-102005 030 437
- US-A- 2 921 846
- US-A- 3 318 741
- US-A- 4 091 769
- US-A- 6 032 460
- US-B1- 6 446 909
- US-B1- 6 652 682

## Beschreibung

Die Erfindung bezieht sich auf eine Kraftmaschine nach dem Oberbegriffs des Anspruchs 1 und deren Verwendung für Unterwassereinrichtungen, insbesondere Unterwasserfahrzeuge.

Zum Antrieb von Unterwasserfahrzeugen kommen elektrische Antriebe, Verbrennungsmotoren und Pressluftmotoren zum Einsatz. Dabei weisen Akkumulatoren und Batterien für elektrische Antriebe eine geringe Energiedichte auf. Gleiches gilt für Pressluftmotoren, aber auch für Verbrennungsmotoren, sofern sie ohne Außenluftzufuhr betrieben werden. In diesem Fall müssen nämlich Tanks mit Luft oder zumindest verdünntem Sauerstoff mitgeführt werden, da sich Verbrennungsmotoren mit unverdünntem Sauerstoff nicht betreiben lassen. Für elektrische Antriebe werden außerdem Kernreaktoren mit Generatoren zur Stromerzeugung eingesetzt, ferner Brennstoffzellen. Während Kernreaktoren bei der Handhabung, im Betrieb und durch politische Beschränkungen Probleme bereiten, weisen Brennstoffzellen mechanisch empfindliche Membranen auf, die bei Defekten zum Entzünden des gebildeten Wasserstoffs führen können.

Aus WO 2007/091270 A ist eine Kraftmaschine nach dem Oberbegriff des Anspruchs 1 bereits bekannt. Dabei wird als Treibstoff beispielsweise Nitrocellulose verwendet. Die Treibstoffe können unter anderem auch gelförmig sein. Zur Förderung des Treibstoffs von dem Vorratsbehälter kann ein Schneckenförderer vorgesehen sein.

Aus US 3,318,741 A und US 2,921,846 A sind Nitromethan und Nitroethan enthaltende gelförmige Treibstoffe für Strahltriebwerke bekannt.

Aufgabe der Erfindung ist es, für eine ohne Luftzufuhr betreibbare, einfache, robuste Kraftmaschine ein Medium hoher Energiedichte bereitzustellen.

Dies wird erfindungsgemäß mit einer Kraftmaschine nach dem Anspruch 1 erreicht. In den Ansprüchen 2 und 3 ist die bevorzugte Verwendung der erfindungsgemäßen Kraftmaschine für Unterwassereinrichtungen, insbesondere Unterwasserfahrzeuge angegeben.

Die erfindungsgemäße Kraftmaschine oder Arbeitsmaschine wird durch Verbrennung eines fließfähigen Treibstoffs und ohne Luftzufuhr betrieben. Damit ist weder eine Außenluftzufuhr, beispielsweise über Schnorchel, notwendig, noch das Mitführen von Lufttanks. Da sie ausschließlich mit einem Medium hoher Energiedichte betrieben wird, ist die erfindungsgemäße Kraftmaschine daher für den Betrieb von Unterwassereinrichtungen, insbesondere Unterwasserfahrzeugen geeignet.

Als Treibstoff wird ein gelförmiger Treibstoff eingesetzt. Der Treibstoff ist durch einen Treibstoff auf Basis wenigstens eines bei Raumtemperatur flüssigen, wenigstens eine Nitro-Gruppe enthaltenden Kohlenwasserstoffs gebildet sein, der mit einem oder mehreren Gelbildnern versetzt ist und gegebenenfalls weitere Additive enthält.

Der die Nitro-Gruppe enthaltende Kohlenwasserstoff ist Nitromethan oder Nitroethan. Der Gelbildner kann beispielsweise ein anorganischer Gelbildner, wie pyrogene Kieselsäure, z. B. Aerosil® oder ein organischer Gelbildner, beispielsweise ein LMOG sein.

Monergole Treibstoffe, also gelförmige homogene Treibstoffe, die zur Verbrennung kein zusätzliches Oxidationsmittel benötigen, sind besonders bevorzugt. Als monergole Treibstoffe werden Nitrogruppen enthaltenden Kohlenwasserstoffe, nämlich Nitromethan oder Nitroethan verwendet. Monergole Treibstoffe zersetzen sich durch Einwirken von Wärme und ggf. Druck oder auf katalytisch initiierte Art und Weise.

,

Der erfindungsgemäß verwendete Treibstoff ist umweltverträglich. So werden beispielsweise keine Schwermetalle oder dergleichen schädliche Substanzen freigesetzt, auch keine umweltschädlichen Gase.

Als Gel ist der Treibstoff zu handhaben. In Gelform weist der Treibstoff ein insensitives und damit ungefährliches Verhalten beispielsweise bei Beschädigungen des Tanks z. B. bei Unfällen auf. Explosionen, Feuerbälle oder dergleichen sind damit verhindert.

Mit der erfindungsgemäßen Kraftmaschine oder Arbeitsmaschine kann z. B. ein Generator zur Stromerzeugung betrieben werden. Die erfindungsgemäße Kraftmaschine kann jedoch auch direkt zum Antrieb eines Unterwasserfahrzeuges, also z. B. von deren Schraube, eingesetzt werden.

Die Kraftmaschine weist ein Brennkammer auf, in der der Treibstoff zum Antrieb eines Kolbens oder eine Turbine verbrennt.

Im Falle eines Kolbenmotors, also einer Kraftmaschine, bei der durch Verbrennung des Treibstoffs ein Kolben bewegt wird, kann ein üblicher Verbrennungsmotor verwendet werden, der zur Zündung des monergolen Treibstoffs eine elektrische Zündung aufweist.

Als Kolbenmotor kann ein Hubkolbenmotor oder ein Rotationskolbenmotor verwendet werden. Dabei kann der Treibstoff direkt in den Brennraum eingespritzt werden oder in eine dem Brennraum vorgeordnete Vorkammer. Statt eines Kolben- motors kann mit den Verbrennungsgasen auch eine der Brennkammmer nachgeschaltete Gasturbine angetrieben werden.

Die Förderung des gelförmigen Treibstoffs erfolgt entweder durch Bedrückung mit Gas oder mit einem mechanisch angetriebenen Kolben im Vorratsbehälter.

Die erfindungsgemäße Kraftmaschine ist vor allem für Unterwassereinrichtungen geeignet, insbesondere Unterwasserfahrzeuge, wie unbemannte Unterwasserfahrzeuge, also beispielsweise auch für Torpedos. Die erfindungsgemäße Kraftmaschine ist zudem als aussenluftunabhängiger Antrieb auch im Weltraum einsetzbar oder in sehr großer Höhe. Ein besonderes Merkmal der erfindungsgemäßen Kraftmaschine besteht in ihrer hohen Leistungsdichte, die z. B. bei Luft atmenden Antrieben durch den Querschnitt des Luftzutritts begrenzt wird.

In der beigefügten Zeichnung zeigen:
Figur 1 schematisch den Antrieb für ein Unterwasserfahrzeug mit einer nicht erfindungsgemäßen Förderung des gelförmigen Treibstoffs und
Figur 2 - 4 jeweils erfindungsgemäße Varianten des Antriebs nach Figur 1.

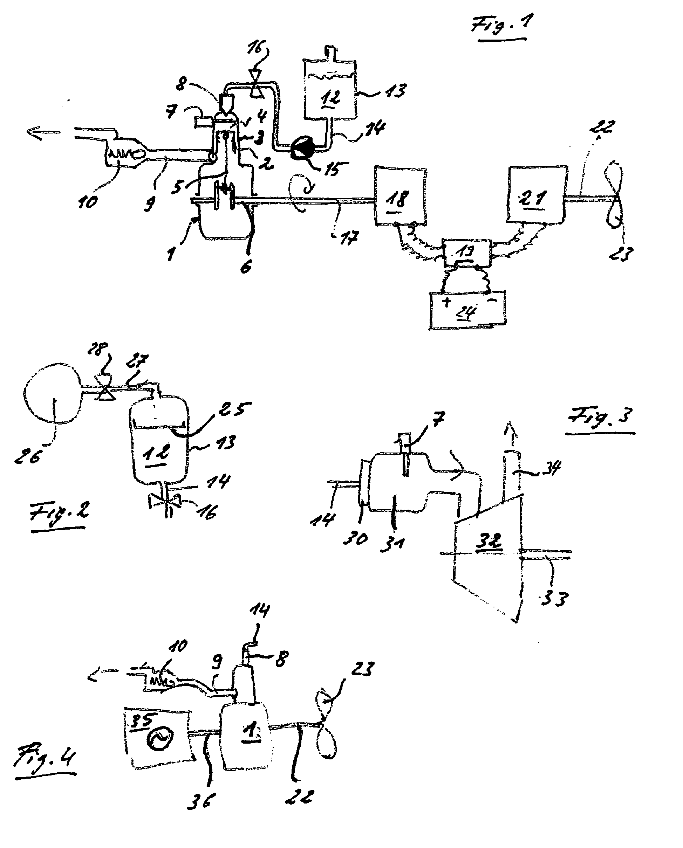

Gemäß Figur 1 weist der Antrieb einen üblichen Hubkolbenmotor 1 mit Kolben 2, Zylinder 3, Brennraum 4, Kolbenstange 5 und Kurbelwelle 6 auf.

Der Brennraum 4 ist mit einer elektrischen Zündeinrichtung 7 und einer Einspritzdüse 8 versehen, ferner einer Abgasleitung 9 mit Druckregler 10.

Der Motor 1 wird mit einem fließfähigen monergolen Treibstoff 12 in einem Tank 13 betrieben, der über eine Leitung 14 mit der Einspritzdüse 8 verbunden ist. In der Leitung 14 sind eine Pumpe 15 und ein Absperrventil 16 vorgesehen.

Die Kurbelwelle 6 treibt eine Welle 17 an, die einen Generator 18 zur Stromerzeugung antreibt. Mit dem Generator 18 wird über einen Regler 19 ein Elektromotor 21 angetrieben, der über eine Welle 22 die Schraube 23 des Unterwasserfahrzeuges antreibt. An den Regler 19 ist zugleich ein Akkumulator 24 angeschlossen.

Wie in Figur 2 dargestellt, kann erfindungsgemäß anstelle der nicht erfindungsgemäßen Pumpe 15 der Tank 13 auch mit einem Kolben 25 versehen sein, wobei ein Druckgasreservoir 26 vorgesehen ist, das über eine Leitung 27 mit einem Gasventil 28 mit dem Tank 13 zum Bedrücken des Kolbens 25 verbunden ist.

Bei der Ausführungsform nach Figur 3 ist die Treibstoffzufuhrleitung 14 mit einem Injektorkopf 30 am Brennraum 31 verbunden, um eine Turbine 32 mit Abtriebswelle 33 und Abgasleitung 34 anzutreiben. Bei der Ausführungsform nach Figur 4 ist die Kurbelwelle des Hubkolbenmotors 1 einerseits über die Welle 36 zum Antrieb des Generators 35 und andererseits zum Antrieb der Welle 22 mit der Schraube 23 verbunden. Ferner ist es möglich, getrennte Kraftmaschinen, z. B. für den Antrieb bzw. die Elektrizitätsversorgung vorzusehen.

## Patentansprüche

1. Kraftmaschine, betrieben durch Verbrennung eines fließfähigen, gelförmigen Treibstoffs (12) ohne Luftzufuhr, mit einer Brennkammer (4,31), in der der Treibstoff (12) zum Antrieb eines Kolbens (2) oder einer Turbine (32) verbrennt, und mit einem Vorratsbehälter (13) für den Treibstoff (12), **dadurch gekennzeichnet, dass** der gelförmige Treibstoff aus wenigstens einem bei Raumtemperatur flüssigen, wenigstens eine Nitro-Gruppe enthaltenden Kohlenwasserstoff gebildet ist, der mit einem oder mehreren Gelbildnern versetzt ist, wobei der wenigstens eine Nitro-Gruppe enthaltende Kohlenwasserstoff Nitromethan oder Nitroethan ist, und wobei die Förderung des gelförmigen Treibstoffs (12) durch Bedrückung mit Gas oder mit einem mechanisch angetriebenen Kolben im Vorratsbehälter (13) erfolgt.

2. Verwendung der Kraftmaschine nach Anspruch 1, zum Betrieb einer Unterwassereinrichtung.

3. Verwendung nach Anspruch 2, wobei die Unterwassereinrichtung ein Unterwasserfahrzeug ist.

## Claims

1. Engine run by the combustion of a flowable, gel-type fuel (12) without aeration, having a combustion chamber (4, 31), in which the fuel (12) for driving a piston (2) or a turbine (32) combusts, as well as a storage container (13) for the fuel (12), **characterized in that** the gel-type fuel is formed by at least one hydrocarbon being liquid at room temperature, containing at least one nitro group and being mixed with one or more gelling agents, wherein the hydrocarbon containing at least one nitro group is nitromethane or nitroethane, and wherein the gel-type fuel (12) is delivered by being pressurized with gas or by means of a mechanically driven piston in the storage container (13).

2. Use of the engine according to claim 1 for running an underwater device.

3. Use according to claim 2, wherein the underwater device is a submersible vehicle.

## Revendications

1. Machine motrice, entraînée par combustion d'un carburant (12) en forme de gel coulant sans amenée d'air, comportant une chambre de combustion (4, 31) dans laquelle le carburant (12) brûle pour entraîner un piston (2) ou une turbine (32), et comportant un réservoir (13) pour le carburant (12), **caractérisé en ce que** le carburant en forme de gel est formé par au moins un hydrocarbure liquide à température ambiante, qui contient au moins un groupe nitro, lequel est mélangé à un ou plusieurs agents gélifiants, l'hydrocarbure qui contient au moins un groupe nitro étant du nitrométhane ou du nitroéthane, et le transport du carburant (12) en forme de gel a lieu par mise sous pression avec du gaz ou avec un piston à entraînement mécanique dans le réservoir (13).

2. Utilisation de la machine motrice selon la revendication 1, pour le fonctionnement d'une installation sous-marine.

3. Utilisation selon la revendication 2, l'installation sous-marine étant un véhicule sous-marin.
